**Europäisches Patentamt**

**European Patent Office**

**Office européen des brevets**

(19)

(11) Publication number : **0 456 701 B1**

# EUROPEAN PATENT SPECIFICATION

(12)

(45) Date of publication of patent specification :
26.04.95 Bulletin 95/17

(51) Int. Cl.⁶ : **H04L 12/40**

(21) Application number : **90902662.7**

(22) Date of filing : **01.02.90**

(86) International application number :
**PCT/GB90/00147**

(87) International publication number :
**WO 90/09068 09.08.90 Gazette 90/19**

(54) DETERMINISTIC TIMED BUS ACCESS METHOD AND SYSTEM.

(30) Priority : **02.02.89 GB 8902276**

(43) Date of publication of application :
**21.11.91 Bulletin 91/47**

(45) Publication of the grant of the patent :
**26.04.95 Bulletin 95/17**

(84) Designated Contracting States :
**AT BE CH DE DK ES FR GB IT LI LU NL SE**

(56) References cited :
**US-A- 4 464 749**
**US-A- 4 701 911**

(73) Proprietor : **University of Strathclyde**
**McCance Building,**
**16 Richmond Street**
**Glasgow G1 1YQ, Scotland (GB)**

(72) Inventor : **PRITTY, David**
**66 Colquhoun Street**
**Helensburgh G84 9TP (GB)**
Inventor : **MASSON, Derek**
**18 Campsie Drive**
**Bearsden**
**Glasgow G61 3HY (GB)**

(74) Representative : **Naismith, Robert Stewart et al**
**CRUIKSHANK & FAIRWEATHER**
**19 Royal Exchange Square**
**Glasgow, G1 3AE Scotland (GB)**

## Description

The present invention relates to an improved deterministic bus access method which is appropriate where a number of stations (or nodes) on a bus which wish to communicate, are located at a distance for example more than 5 metres apart from each other. In particular, but not exclusively, the invention relates to the field of Local Area Networks (LANs).

Any system which allows one or more transmitting stations to communicate with one or more receiving stations over a shared serial or parallel bus using some form of (statistical) time division multiplexing (TDM), requires an access mechanism (or protocol) to determine which one of several active transmitting stations is to be allowed access to the shared bus. In systems where the stations are located close to each other (e.g. less than 5 metres apart) some centralised arbitration system can be used e.g. a central controller. However, in more physically distributed systems the electrical signal propagation delay can limit the effectiveness (speed) of the access mechanism.

Where the access mechanism has to be supported by a bus, constraints imposed on the speed of the access mechanism by the basic nature of a bus can be particularly severe (especially with short packet transmission times and physically long buses). These constraints are firstly that any signal transmitted on a bus is broadcast so that it is received by all stations connected to it and secondly, that the maximum time between a station sending a signal and another station receiving the signal is the end-to-end propagation time of the bus.

The performance of one widely used method of bus access, Collision Sense Multiple Access/Collision Detect (CSMA/CD) is limited mainly by the second consideration; because here the lower limit of the contention slot time which defines the basis of the CSMA/CD back-off algorithims, is fixed by the fact that twice the end-to-end propagation time of the bus has to elapse after start of transmission before a station can be sure that it is the only station transmitting over the bus.

The performance of another widely used method of access, token passing, is limited chiefly by the first consideration because here the token has to be directed to one node at a time by the addition of adequate address information (to the token). The time to transmit the token from one node to the next mode (in the logical ring) plus some allowance for internal node processing and node to node propagation times generally yields fairly lengthy node to node polling times (e.g. of approximately 50 uS in the case of a typical 5 Mbps carrier band implementation of the IEEE 802.4 token passing bus).

The time for the token to circulate completely round the logical ring of such a network is therefore the node to node polling time multiplied by the number of network nodes: for a typical 30 node network this results in a token circulation time of about 1.5 ms (30 x 50 uS). This circulation time results in excessively long waiting time delays for short packets of data.

Less widely used deterministic methods of bus access are bit map protocols such as (Multi Level Multi Access (MLMA). In each of these cases the total time taken by the determinsitic methods is based on the fact that the duration of each bit of information in the access method must equal or exceed the end-to-end propagation time of the bus. (e.g. 5uS for a 1Km bus) so that all stations are aware of when each particular bit in the access protocol has been set.

It will be appreciated that the efficiency of an access protocol is limited by the ratio of packet transmission time to access time. This is of particular importance as increased data rates result in decreased transmission times for the same length of packet.

U.S. Patent No. 4,464,749 describes a bi-directional token flow system based on the use of virtual tokens for use on a bi-directional bus with a number of connected nodes - called BIUs (Bus Interface Units). Each packet contains a source address, a destination address, a cyclic redundancy check and frame delimiters in the normal way. The right of a BIU to transmit a data packet onto the bus is transferred from BIU to BIU by the passage of a virtual token. Ulug's invention uses a system of time delays to ensure that no two BIUs receive a token at the same time and thus only one BIU will have the right to place its information on the bus at any given instant, i.e. when it receives the virtual token. All BIUs listen to the bus and are only deemed to have received the virtual token if the bus is silent when their delay timers expire. It will be understood that although Ulug's invention provides contention free access to a bi-directional bus it suffers from a number of disadvantages. The first is associated with the time required to calculate each new BIU time delay using the BIUs microprocessor after the end of the previous packet. This time imposes a lower limit on the delay time to receipt of the virtual token which makes the method impractical for use in modern high speed local area networks.

A second disadvantage is that the time delay used by each BIU is calculated from the physical address of the BIU. In modern local area networking systems the physical addresses are unique 48 bit numbers allocated on a worldwide basis by the IEEE - rather than being present by switches on a local basis. It is therefore impractical to base a system of time delays on the physical addresses of the BIUs - because there is no ability to arrange for adjacent nodes to have sequential addresses - for instance if BIUs were replaced or added later to the network.

U.S. Patent No. 4,701,911 describes another system for contention free access to a uni-directional bus with a number of connected BIUs. BIUs have one connection to a uni-directional receive bus and one connection to a uni-directional transmit bus. The downstream end of the transmit bus is coupled to (what Ulug defines as) the downstream end of the receive bus by an intelligent head end, in the normal way. The order of access of BIUs which wish to transmit a data packet onto the transmit bus is controlled by a system of "beep" signals, which are transmitted by each BIU after receipt of a start-up packet. The start-up packet is transmitted from the intelligent head end which also relays all signals from the transmit bus to the receive bus. The access system operates by each BIU counting the number of beeps received ahead of its principal beep. This is its order in the transmit queue, i.e. the station nearest the head end transmits first and so on. Ulug includes both a left sweep and a right sweep start-up packet. In the case of the right sweep start-up packet BIUs count the number of beeps they receive before their own principal beep to determine the transmission order and in the case of a left sweep they count the number of beeps after receipt of their principal beep. The BIU which receives no beeps after its principal beep transmits its data packet first.

This system is only practical where the propogation delay, and hence the spacing between nodes, is greater than the time taken to transmit the "beep" signal. It will also be appreciated that considerable spacing between nodes is required for each node timer to identify its principal "beep" unambiguously. The disclosed method is therefore restricted to networks where the physical spacing between nodes is large.

The object of this invention is to obviate or mitigate disadvantages associated with the basic broadcast nature of a bus as evidenced by the problems with the above existing methods. This is achieved by transmitting an access signal onto the bus and by locating a master polling node capable of generating a master timing reference signal or slot pulse at a suitable point on the bus, for instance at one end. The function of issuing the master timing signal can be carried out by a dedicated node with no other purpose or by a node which can also transmit messages. In each case the node carrying out these functions is henceforth referred to as the polling node.

According to one aspect of the present invention there is provided a method of providing timed deterministic access to a bus structure having a plurality of nodes coupled thereto, said method comprising the steps of,

a) disposing at least one polling node which acts as a master polling node at a suitable point on the bus structure;

b) generating a timing reference signal which is independent of the data transmission activity from said master polling node to invite all network activity on the bus structure after a period of silence, the period of silence varying in accordance with the previous activity on the bus structure;

c) providing each node coupled to the bus structure with a predetermined time delay calculated independently of the data address of the node, and fixed prior to the start of normal operation of the network which determines the order of transmission if the node is active;

d) detecting the generated timing reference signal at each node as the signal travels along the bus structure, said timing reference signal being used by each of the nodes to control its transmission activity onto the bus structure, and

e) generating a transmission on the bus structure from an active node which has the smallest value of the sum of the predermined time delay and the time at which the timing reference signal reaches the node if the bus is silent at that time.

It will be appreciated that the value of the time delays at each node are chosen so that transmission from a number of active nodes follows a set sequence.

Preferably, the polling node is disposed at the end of the bus. This arrangement provides the highest access performance.

Preferably, when the polling node is at the end of the bus the time delay corresponds to the order of the physical location of each node on the bus structure from the master polling node. Alternatively, the time delay can be fixed at each node by modifying the time duration of the reference signal as it passes through each node.

Preferably when each node receives a reference signal it

a) sets a first flag if it has no message to transmit, or

b) sets a second flag if it has a message to transmit and the state of the bus (i.e. the transmissions from other nodes) allows it to transmit information onto the bus structure after its predetermined delay.

Preferably also, each node remains silent after it sets its first flag until it receives the next reference signal from the master polling node.

Preferably also each node remains silent on receipt of subsequent timing reference signals from the master polling node after it has transmitted its message and set its second flag.

Conveniently, the method includes the step of detecting, at the master polling node, when transmission of a packet is complete before the next reference signal is issued.

Preferably also, the master polling node detects when all nodes have set their second flags and are remaining silent and after a predetermined period issues a cycle start reference signal to reset the second flags of each node to permit all nodes to be able to start transmission on receipt of a subsequent timing reference signal.

Alternatively the operation of the nodes can be arranged such that second timing reference signal issued after a predetermined period of silence can reset the second flags of each node to permit all nodes to start transmission.

Conveniently where polling is at one end of the bus the timer delay of each node is determined by the time between the start of the reference signal and the start of the packet transmission which is n.td where n is an integer representative of the node position from the master polling node and td is a small time delay.

Alternatively when the system is configured so that the location of the polling node and of the other nodes is unimportant then nodes are assigned time delays 2n.tp + td where n is an integral representation of the number of the node, tp is the maximum end-to-end propagation delay on the bus structure and td is a small time delay.

Alternatively when the bus structure is a uni-directional bus structure the time delay can be varied for each node by varying the time duration of the reference signal received at the node wishing to transmit.

Preferably when the polling node is located at an end of the bus structure the method includes associating each reference signal with a priority reservation field generated between the reference signal and the start of the packet being transmitted from a node, the priority reservation field being compared by each node with its own priority and a node being able to transmit onto the bus structure if its priority is greater or equal to a predetermined priority value, and the bus structure is silent.

Conveniently, when the master polling node is located at one end of the bus the master polling node generates a priority request signal followed by a priority invitation period to allow the nodes to set their priority fields, and these fields being circulated back to the master polling node which issues a further reference signal which allows the first upstream node having a priority greater than or equal to the priority and reservation field to transmit a packet during the current interval if the bus is silent.

Preferably, also the time delays of each node can be set manually or automatically.

Conveniently in automatic setting the master polling node sends a reference signal pattern to each node in turn, said reference signal pattern containing node address information for the particular node, and after a preset time the recipient node replies to the master polling node, whereupon the master polling node stores a value representative of the distance of the recipient node from the master polling node in its memory and allocates a unique value of time delay to each node using the network's communication facilities.

It will be appreciated that it may be convenient to implement these communication facilities (which establish the values to which the timer delays should be set) using other access protocols (such as CSMA/CD).

Conveniently also, the master polling node automatically reconfigures the priority of nodes coupled to the bus structure in response to the node request using the network's communication facilities.

Conveniently the method includes the step of equipping a number of nodes with polling facilities whereby on failure of upstream nodes the most operational upstream node automatically assumes the polling function. Alternatively in the arrangement where the system operates independent of the physical location of the polling node any other active node can assume the polling function.

Preferably when the bus structure is a uni-directional bus each node coupled to the bus structure is capable of issuing a reference signal after it has transmitted the end of its packet, wherein the master polling node passes the received signal back to its upstream output to allow several packets to co-exist on the uni-directional bus (assuming the electrical length of the bus is longer than the transmission time of a packet).

According to another aspect of the present invention there is provided a system for providing timed deterministic access to a bus structure having a plurality of nodes coupled thereto, said system comprising,

a) at least one master polling means coupled to the bus structure at a suitable location for generating a timing reference signal which is independent of the data transmission activity on said bus structure to initiate all network activity on the bus structure after a period of silence, the period of silence varying in accordance with previous network activity on the bus structure;

b) timing reference signal detecting means coupled to each node for detecting said reference signal as it passes said node, each node coupled to the bus structure having means of storing a predetermined time delay calculated independently of the data address and fixed prior to the start of normal operation of the network, said timing reference signal being used by each of the nodes to control its transmission activity onto the bus structure, and

c) bus activity monitoring means associated with each a system node for monitoring the activity of the bus structure, the arrangement being such that a transmission is generated on the bus structure from an active node whose time delay grants it the opportunity to transmit first a packet onto said bus structure a predetermined time after the reference signal has been received by said timing reference signal detecting means if the bus is silent at that time.

Preferably, the master polling means is located at one end of the bus and the active node closest to the polling node transmits first.

Alternatively the polling node may be located anywhere on the bus structure and the increments between the time delays assigned to each node in this arrangement are conveniently made longer than twice the maximum propagation delay between the most remote ends on the bus structure.

Preferably also said time delay means is variable for each node to vary the time delay after which the node can transmit a packet.

Alternatively said time delay means is fixed at each node, the time delay after which the node issues a packet being modified by lengthening the timing reference signal as it passes through each node.

Conveniently the time delays of each node are manually or automatically resettable to a different value.

Advantageously the system nodes are automatically reconfigurable to modify the value of the priority of nodes in response to node requests.

Conveniently the bus structure is selected from the group consisting of a bidirectional linear bus, a uni-directional linear bus, a star (hub) and a tree.

Preferably also the system includes means for generating a priority reservation field coupled to the master polling unit, and priority comparison means coupled to each node for comparing the priority of the reservation field with the priority of the node.

Conveniently, the system may provide timed deterministic access to a uni-directional bus.

These and other aspects of the invention will become apparent from the following description when taken in combination with the accompanying drawings in which:-

Fig. 1 is a schematic block diagram of a bi-directional linear bus having a polling system in accordance with an embodiment of the invention to provide deterministic access to the bus;

Fig. 2a-d are waveform timing diagrams depicting propagation of a timing reference signal or slot pulse and a packet preamble (or other packet start method) along the bus shown in Fig. 1;

Fig. 3 depicts cycle timing waveforms for use with the bus shown in Fig. 1 using this method of access;

Fig. 4 is a schematic block diagram of a tree topology used with a polling system in accordance with a second embodiment of the invention to provide timed determinsitic access to the bus;

Figs. 5a to c are waveforms timing diagrams depicting propagation of a timing reference signal or slot pulse and a packet preamble along the tree shown in Fig. 4.

Fig. 6 is a schematic block diagram of a Hub (or star) bus configuration having a polling system to provide deterministic access to the Hub bus in accordance with another aspect ot the invention;

Fig. 7 is a schematic block diagram of a uni-directional bus with a polling system to provide deterministic access in accordance with another embodiment of the invention;

Fig. 8 is a schematic block diagram of part of a node 72 having a fixed timer delay connected to the uni-directional bus system;

Fig. 9 is a time waveform diagram depicting propagation of a timing reference signal or slot pulse and packet preamble for use with an alternative method of determining node access to that shown in the arrangement of Figs. 7 and 8

Fig. 10 is a figure similar to Fig. 1 in which the master polling node is located between the ends of the bus;

Fig. 11 is a diagram of a tree topology embodiment similar to Fig. 4 with the polling node located in a branch of the tree;

Fig. 12 is a schematic diagram of a star in accordance with a further embodiment of the invention;

Fig. 13 is a schematic diagram of an Ethernet bus coupled to a Real-time (RT) node and a Non-Real-time (NRT) node in accordance with another embodiment of the invention;

Fig. 14 depicts cycle timing waveforms used with the bus of Fig. 13;

Fig. 15 is a schematic block diagram of a linear bus coupled to a polling system in accordance with a further embodiment of the invention to provide prioritised access to the bus, and

Figs. 16a, 16b are waveform diagrams depicting propagation of a slot pulse with an accompanying priority reservation period which accommodates a priority reservation field for use with the bus shown in Fig. 15.

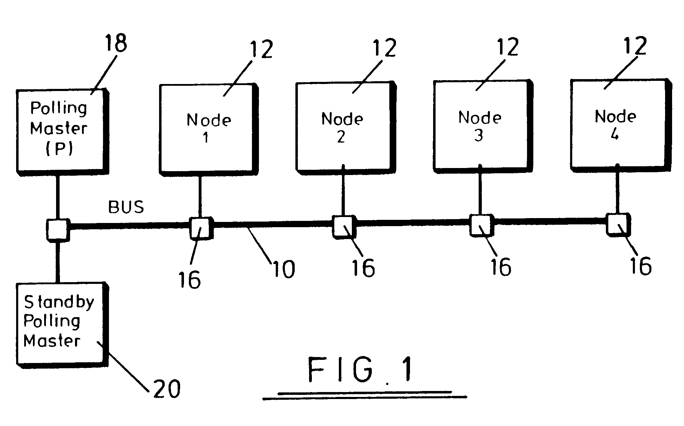

Reference is first made to Fig. 1 of the drawings which depicts a bi-directional linear bus 10 coupled to nodes 12 via connectors 16 on the bus 10. It will be appreciated that a plurality of nodes are coupled to the bus but only four nodes 1 to 4 are shown in the interest of clarity. A monitor or master polling node 18 is located at one end of the linear bus 10. It will be appreciated that this master node 18 can also transmit data as well as controlling access to the bus 10 although only this function is described. One or more standby polling master nodes 20 are also located at the end of the bus 10 so that if master polling nodes 18 fails the standby node 20 can replace polling functions, as is well known in the art. It will be appreciated that these standby nodes may also be capable of data transmission. It will further be appreciated that where the increment of time delays between nodes has been chosen to exceed twice the maximum end to end propagation delay on the bus the physical location of the standby nodes is unimportant and thus any node can assume the polling function. Each node 12 is coupled to a connector 16 via a bus transceiver (not shown in the interest of clarity).

It will be appreciated that the system is arranged so that for polling functions uni-directional operation is achieved on a bi-directional linear bus by locating the polling node 18 at one end of the bus. Thus when a polling node located at an end issues a signal such as a pulse it propagates uni-directionally along the bus. Termination matched to the characteristic impedance of the bus will ensure a limited amplitude of reflection of signals from the remote end.

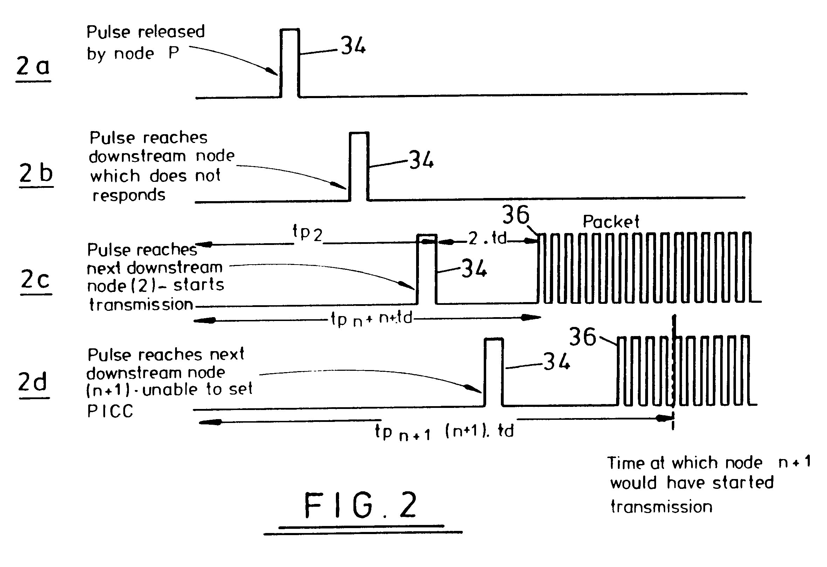

Operation of the system for a medium speed data rate i.e. (1 to 10 Mbps) will now be described with reference to Figs. 2a-2d and Fig. 3 as well as Fig. 1 but with 30 nodes coupled to the bus although it will be understood that higher and lower data rates can be used. All nodes 12, coupled to the bus listen to the bus 10. The master polling node 18 monitors the bus and, when the bus is silent for a sufficient period, issues a timing reference signal or "slot" pulse 34 which is conveniently represented as a pulse of rectangular shape as seen in Fig. 2a. This signal (pulse) 34 propagates uni-directionally and is received by each node 12 after its release at a time corresponding to the product of the physical distance of the particular node from the master polling station 18 and the propagation rate of the medium. Each node 12, is equipped with a delay timer (not shown in the interest of clarity) which is set to a value n.td where n is the number of the node according to its physical position from node 18, and td a small delay, for example 0.5 uS per node. When a node having a message to transmit receives the timing reference signal or slot pulse 34 for example, node number 2 in Fig. 1 begins transmission of the packet 36 at a time $tp_2$ which is the propagation time of the slot pulse from node 18 as best seen in Fig. 2c. In this case $tp_n + ntd = tp_2 + 2.td$.

The inclusion of a time delay corresponding to the order of physical location of each node on the bus 10 from node 18 ensures that only one active node, namely that located closest to master polling node 18, can start transmission in any one slot pulse cycle. This is achieved by a mechanism shown in Fig. 2d. Suppose node n and node n+1 (eg node 2 and node 3) wish to transmit in a given slot pulse cycle, where a slot pulse cycle is the time between the issue of one slot pulse by the polling node and the next. Because node 2 is the upstream node (i.e. that nearer the polling node 18), it inspects the state of the bus at a time $tp_2 + 2.td$. and finds that the bus is silent and starts to transmit.

At time $tp_3$ node 3 receives the slot pulse. It in turn examines the bus at a time 3.td after the slot pulse arrives at the node and finds it busy because of the packet being transmitted from node 2. It therefore waits until the next slot pulse is received before it can attempt to transmit.

When a node receives a slot pulse 34 the node :
1. Sets a "next slot" flag if it has no message to transmit, as in the case shown in Fig. 2b for node 1; or

2. Sets a "transmit" flag and starts to transmit a packet as described above as shown in Fig. 2c for node 2. A "next slot" flag and a "transmit" flag are internal bits in each node which are set to a particular predetermined state to control the operation of the node as described below.

Once a node has set its "next slot" flag it remains silent until it receives the next "slot" pulse 34 from polling node 18. Thus nodes which are physically close to node 18 and which discover later in the slot pulse cycle that they have traffic are prevented from transmitting once the current slot pulse of the current cycle has propagated past them. Following from the description above, it will be understood that once transmission from a particular node has started the transmission signal propagates to downstream nodes (those further from node 18), before these nodes are allowed (by their delay timers) to start their own transmissions. These nodes thus recognize the busy nature of the current slot cycle and also set their "next slot" flags.

The above describes the basic (timed) deterministic access method for one slot pulse cycle which gives one active node access to the bi-directional linear bus. After transmission of a packet, node 18 detects that the bus 10 has gone silent and issues another slot pulse. Alternatively the downstream end of bus 10 can be connected back into the receiving circuits of master node 18.

Eventually all active nodes will have a chance to transmit and will set their "transmit" flags. After that the polling node will fail to detect the start of a packet. In this case the polling master node 18 knows that within twice the end-to-end propagation delay of the bus plus M.td that no nodes wish to transmit (where M is the number of nodes connected to the bus excluding the polling nodes).

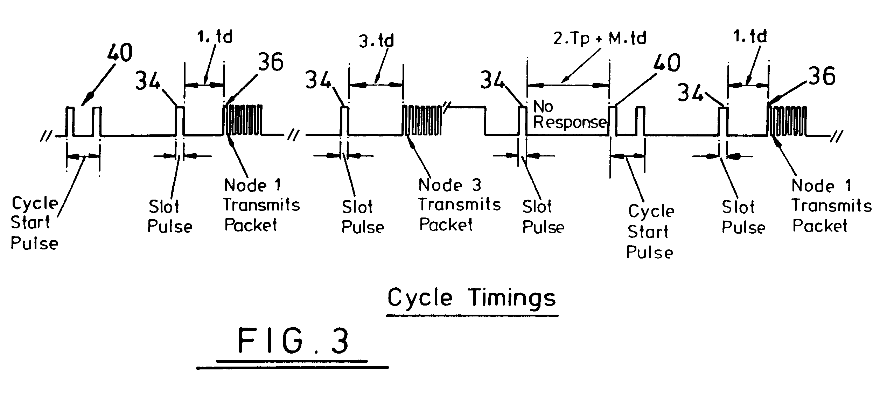

When the polling master node 18 detects a silence extending beyond this period the node 18 realises that all active stations have been allowed access to the bus at least once. The polling node then transmits a pulse pattern called the "cycle start" pulse 40 as seen in Fig. 3.

The cycle start pulse 40 ensures an orderly polling cycle for all the nodes. It causes all nodes 12 to reset their "transmit" flags and allows all nodes to start transmission on receipt of a slot pulse 34, subject to the above mentioned rules. The "cycle start" pulse 40 is followed by a series of slot pulses and this is repeated throughout the operation of the bus access method. It will be appreciated that the operation of the nodes can be modified such that a second slot pulse after a predetermined period of silence can perform the same function as the cycle start pulse. Such an arrangement has the advantage that a second signal pattern does not require to be generated or detected.

The above describes the operation of the invention with a bidirectional linear bus. It will be appreciated that operation is possible with other bus structures namely tree, hub (or star) and a uni-directional bus and each of these situations is described below.

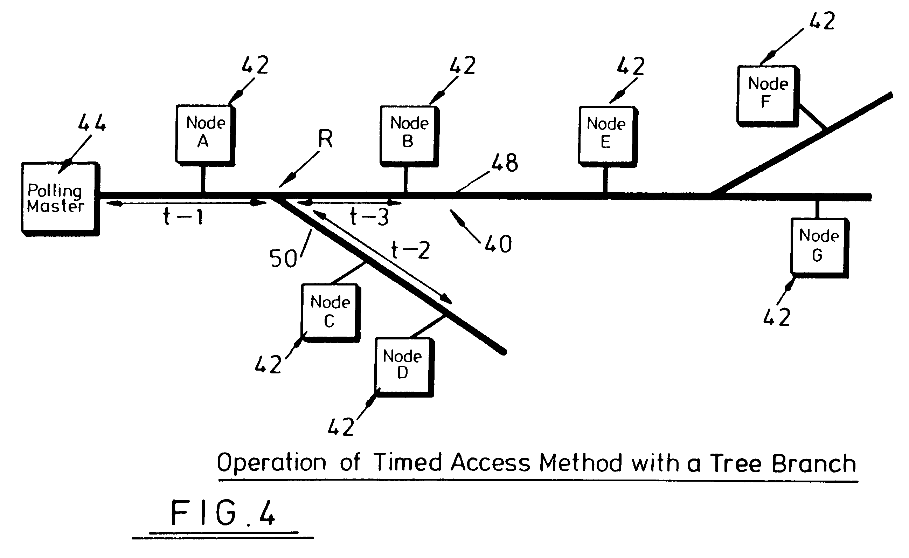

Reference is first made to Fig. 4 of the drawings which depicts a tree 40 coupled to nodes 42. It will be appreciated that a plurality of nodes are coupled to the bus but only seven A to G are shown in the interest of clarity. A monitor or polling master node 44 is located at the "root" of the tree. The master node 44 can also transmit data as well as controlling access to the tree 40. Standby polling nodes can also be provisioned but are not shown in the interests of clarity.

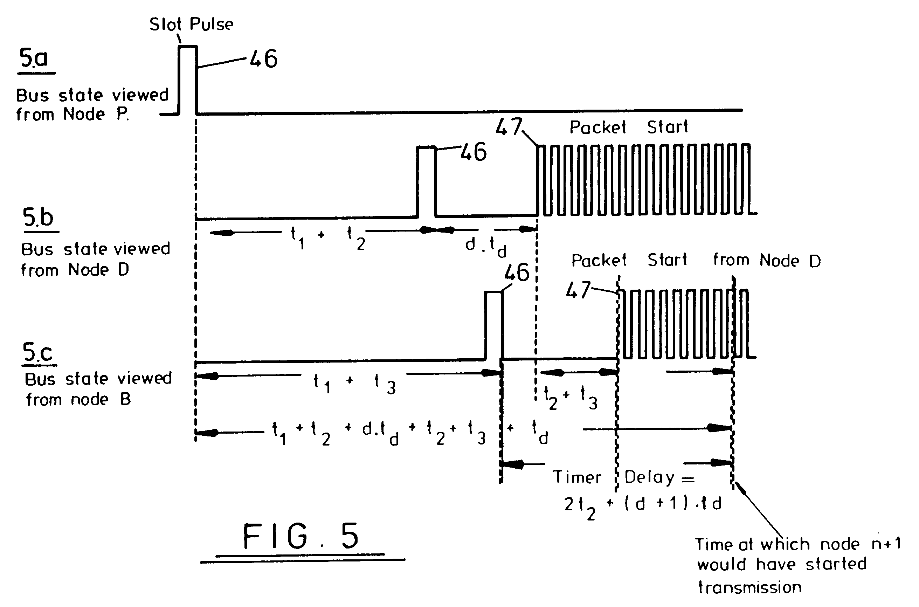

Operation of the system will now be described with reference also to Figs. 5a-5c. All nodes 42 coupled to the tree (bus) listen to the bus 40. The master polling node 44 monitors the bus and issues a "slot" pulse 46 conveniently of rectangular shape as shown in Fig. 5a when the bus is silent. This pulse 46 propagates along the tree 40 and is received by each node 42 at a time corresponding to the physical distance from the master polling node 44. It will be appreciated that at point R on the tree the slot pulse 46 will propagate simultaneously down the trunk 48 and down branch 50 of the tree to nodes C and D. $L_1$ is the distance of point R from the master polling node, $L_2$ is the distance from point R to node D and L3 is the distance from point R to node B. The propagation times corresponding to lengths $L_1$, $L_2$ and $L_3$ are $t_1$, $t_2$ and $t_3$ respectively. The slot pulses reach node D at a time $t_1 + t_2$ and node B in a time $t_1 + t_3$ as seen in Figs. 5b and 5c.

Operation is described for the case where the polling algorithm is chosen to allow access to the bus by nodes C and D before node B. The values of timer delay for nodes C and D are thus chosen according to their physical position from the Polling Master. Suppose that for node D the delay is $d.t_d$. The packet from D will then reach B at time $t_1 + 2t_2 + t_3 + d.t_d$.

A suitable value for the time delay for node B is

$$t_1 + 2t_2 + t_3 + (d + 1).t_d - (t_1 + t_3). = 2t_2 + (d + 1).t_d$$

and this is diagrammatically seen in Fig. 5c which is the time at which node n+1 (node B) would have started transmission.

Other nodes more distant from the polling node are allocated higher values of timing delay. The values of timer delays for other branches can be calculated using the above method and example. It will be understood that a cycle start pulse is also used to ensure an orderly polling cycle for all the nodes in the same way as achieved with the bidirectional bus and the cycle start pulse can be a pair of pulses as seen in Fig. 3 or other suitable signal pattern of pulses. Alternatively a second slot pulse after a predetermined period of silence can be used as heretofore described.

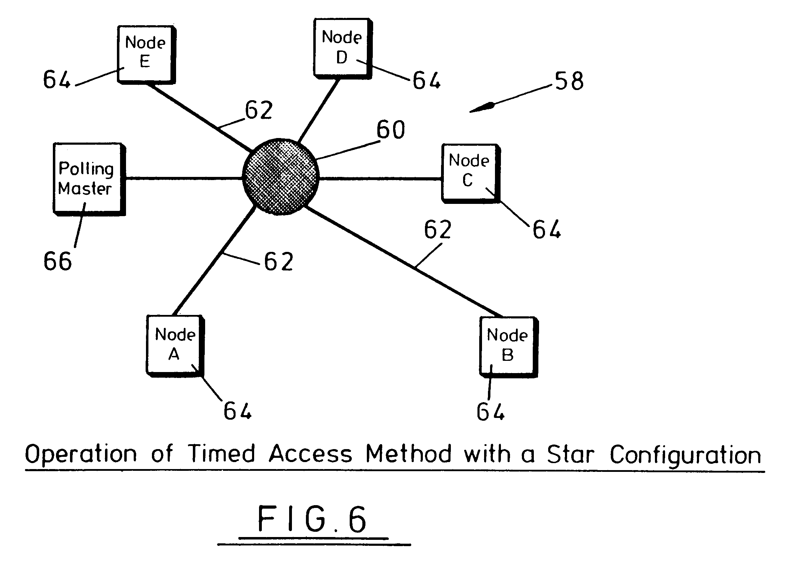

Reference is now made to Fig. 6 of the drawings which is a schematic block diagram of a Hub (or star) bus configuration 58 having a polling system in accordance with further embodiment of the invention to provide deterministic access to the Hub bus.

Reference is now made to Fig. 6 of the drawings which depicts a hub 60 coupled by star links 62 to five nodes 64 A to E. A monitor or polling master node 66 is connected to the hub 60 . It will be appreciated that this master node 66 can also transmit data as well as controlling access to the bus configuration although only this (polling) function is described. The master polling node 66 monitors the bus and issues a slot pulse of rectangular shape as described above when the bus is silent. This pulse simultaneously propagates along the star links to the nodes 64 A to E which are at a distance $L_1$, $L_2$, $L_3$, $L_4$ and $L_5$ respectively from the Hub 60. The signal propagation times corresponding to $L_A$ to $L_E$ are $t_A$ to $t_E$ respectively. Each node will receive the slot pulse at times $t_h+t_a$, $t_h+t_B$, $t_h+t_D$ etc. where $t_h$ is propagation time between the polling master 66 and the hub 60.

The operation of the timed access method is as follows:-

The time for the slot pulse to reach Node A is $t_h+tA$. The earliest time that node A can start transmission is $t_h+t_A+t_d$ where td is the timer delay at each node. Thus the time for a packet transmitted from node A to reach node B is then $t_h + t_A+t_d+t_a+t_B$

Furthermore the time for a slot pulse to reach node B is $t_h + t_B$

To ensure correct operation the B node timer delay must be greater than the difference between the arrival time of the slot pulse and a packet from node A.

ie, the node B timer delay = $(t_h + 2t_A + t_B + t_d) - (t_h + t_B) = 2t_A + t_d$.

Therefore the value of the timer delay at node B is chosen as $2t_A + 2t_d$.

Thus the earliest time node B can start transmission is $t_h + 2t_A + t_B + 2t_D$. This packet will arrive at node C at a time $t_h + 2t_A + 2t_B + t_C + 2t_d$

The time for the slot pulse to reach node C is th + tC and, as before, the timer delay at node C must be greater than $t_h + 2t_A + 2t_B + 2t_d +t_C - t_h - t_C = 2t_A +2t_B +2t_d$. Therefore a value of $2t_A + 2t_B + 3t_d$ is chosen.

Summarising of the above it will be understood that the:

timer delay at node A = $t_d$
timer delay at node B = $2t_A + 2t_d$
timer delay at node C = $2t_A + 2t_B + 3t_d$.

The above equations indicate how one method of operation of the timed access method with a hub connected bus can be implemented.

The operation of the timed access method applied to a uni-directional bus will now be described below.

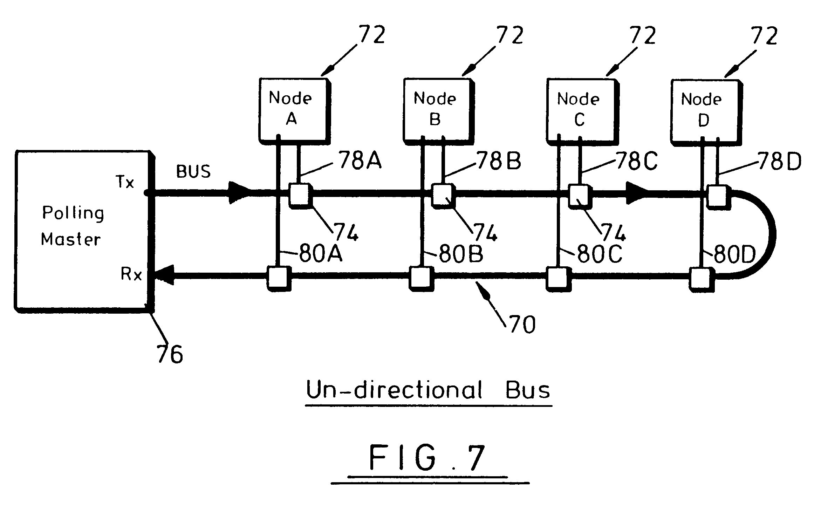

Fig. 7 is a schematic block diagram of a uni-directional bus 70 to which a series of four nodes 72 is connected via repeaters 74. A polling master node 76 is located with its transmitter at the most upstream end of the bus. A standby node can be provisioned but this is not shown in the interests of clarity. It will be understood that each node connected to the bus 70 can listen to the upstream state of the bus by a link 78A to 78D and transmit onto the bus over the same link or an adjacent link 78A to 78D. Links 80A to 80D allow the respective nodes 72A to 72D to listen to the downstream state of the bus to be able to receive messages transmitted on the upstream part of the bus by links 78 A to D. The arrangement shown in Fig. 7 can be used with different value timer delays for each node as described above to determine the transmission times for each node.

It will further be appreciated that an alternative arrangement of the uni-directional bus system is to incorporate fixed timer delays within the nodes 72A to 72D. The system uses a slot pulse and cycle start pulse pattern (or two adjacent slot pulses) in the same manner as described above.

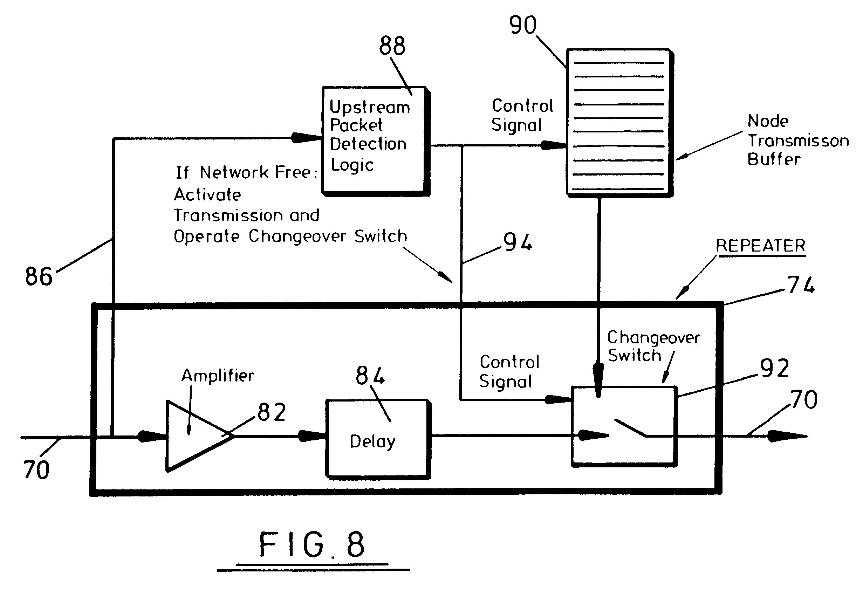

Reference is now made to Fig. 8 which is a schematic block diagram of part of a node 72A with a timer delay connected to the bus 70. The fixed delay is the same for all nodes.

The node is coupled to the repeater 74 which includes an amplifier 82 in series with a delay element 84 and the bus 70 is also coupled by link 86 to a slot pulse detection circuit 88 in the node which is connected to a node transmission buffer 90. A changeover switch 92 is connected between bus 70 and the outputs of the delay circuit 84 and the node transmission buffer 90. The changeover switch 92 is also coupled to the logic circuit 88 by a control conductor 94 for controlling switch operation as will be described.

In operation, all signals on the bus 70 pass through the repeater amplifier 82 which includes delay element 84 and change over switch 92. This allows the node's upstream packet detection logic 88 to determine whether a packet is arriving from an upstream node before a decision has to be made on whether to initiate a transmission from the transmission buffer 90 or whether the network is already transmitting an upstream packet. If the bus is silent and the node wishes to transmit the changeover switch 92 is connected to the transmission buffer 90.

If the network is active (with an upstream packet) a control signal from logic circuit 88 on conductor 94 causes the changeover switch to connect the output of the delay element 94 to the downstream bus 70. If the medium is silent the control signal causes the output of the node transmission buffer 90 to be connected to the downstream bus.

It will be further appreciated that an alternative arrangement of the uni-directional bus system allows the same fixed timer delays to be incorporated at all of the nodes 72a to 72d. The system uses a slot pulse and cycle start pulse (or two adjacent slot pulses) in the same manner as described above.

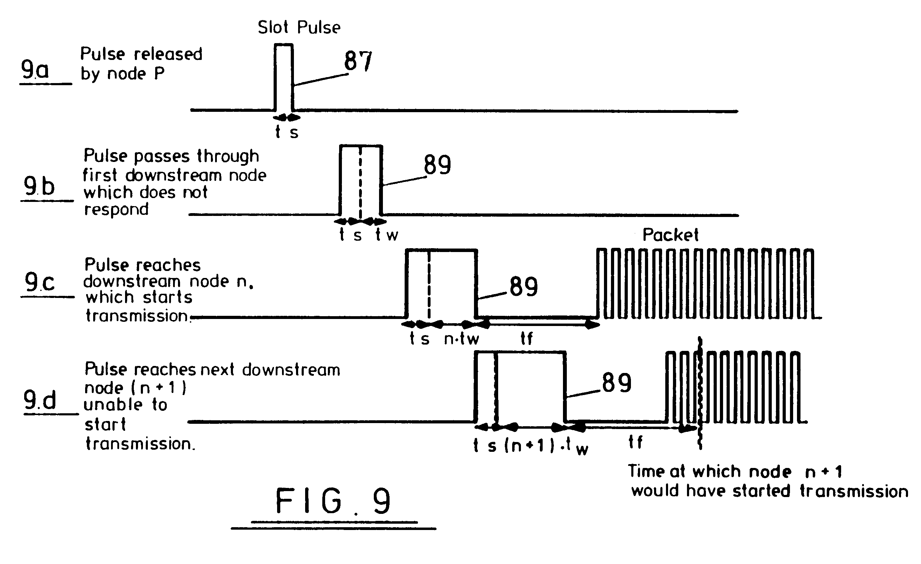

Reference is now made to Fig. 9 which depicts the operation of an alternative arrangement to that of Fig. 8 to determine node access in the bus structure shown in Fig. 7 where the nodes 72a to 72d each contain a circuit means to extending the length of the slot pulse by a fixed amount, say $t_w$, as it passes through each node in turn. As the slot pulse 87 passes through each node it is lengthened by an amount $t_w$. A node wishing to transmit a packet does so after a fixed time delay $t_f$ reckoned from the back edge 89 of the slot pulse i.e. timing reference signal 87. A downstream node wishing to transmit inspects the upstream state of the bus $t_f$ after the extended edge 89 of the slot pulse 87.

When node n and node n+1 (eg node B and node C wish to transmit in a given slot pulse cycle, where a slot pulse cycle is the time between the issue of one slot pulse and the next, then because node 2 is the upstream node it inspects the state of the bus at a time $t_s + 2.t_w + t_f$ after the start of the slot pulse and finds it silent and starts to transmit. Node 3 wishes to transmit and examines the state of the bus $t_s + 3.t_w$ after the start of the slot pulse. It finds the bus busy at that time and sets its "next slot" flag and awaits receipt of the next slot pulse.

Alternatively nodes 72A to 72D can be equipped with a circuit for detecting that the slot pulse length has been increased from $t_s$ to $t_s + t_w$ (not shown for the sake of clarity).

In this arrangement the first upstream node with a packet to transmit determines that the width of the slot pulse is $t_w$ and lengthens it to $t_s + t_w$ and transmits its packet.

Other downstream nodes detect the widened slot pulse indicating that the net is busy and remain silent for that slot pulse cycle.

The cycle start pulse (or adjacent slot pulses) arrangement is operated in a manner similar to that described above.

Various modifications may be made to the bus structures hereinbefore described without departing from the scope of the invention. The principal modification is locating the polling node at any suitable location on the bus structure.

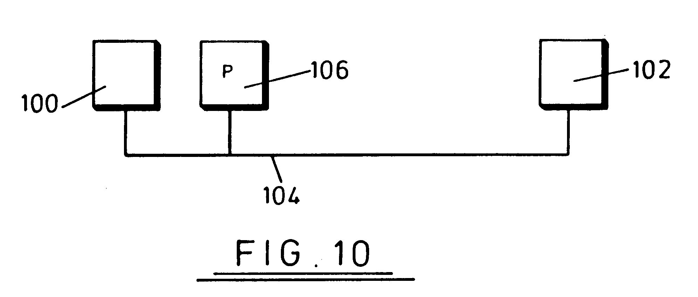

Reference is made to Fig. 10 which depicts nodes 100 and 102 connected to bus 104. Polling node 106 is also connected to bus 104 very close to node 100. Node 102 is located very close to the remote end of the bus. Since node 100 is very close to the polling node and node 102 is as remote from the polling node as is possible on the bus it would be natural to choose time delays which would allow node 100 to transmit before node 102. If we assign time delays to node 102 that allows it to transmit before node 100 then we have assigned time delays to the nodes which provide an order of transmission of the two nodes which is independent both of the physical position of either node on the bus and of the polling node.

Allocation of the following time delays allows node 102 to transmit before node 100. Assuming the slot pulse is released from the polling node 106 at time t=0 then it is received by node 100 at t=0 (since there is negligible propagation delay between these nodes) and by node 102 at t=tp (the end to end propagation delay of the linear bus). Node 102 transmits its message at time t=tp + td where td is a small time delay. As shown in Fig. 10 this is received by node 100 at time t=2. tp + td. Because the delay at node 100 is 2.tp + 2.td node 100 does not transmit.

If node 102 is now moved closer to the polling node it will transmit earlier and thus provide a greater time safety margin in preventing node 100 transmitting. Also if node 100 is moved further from the polling node it will receive the slot pulse later (and given the same time delay) will transmit later (again increasing the safety margin). This logic can be expanded in a bus structure to cover a multiplicity of nodes. Additionally if the location of the polling node n is further from node 100 and closer to node 102 then node 102 will transmit earlier, and node 100 will transmit later. This shows that the physical location of the nodes are unimportant when these time delays are assigned to nodes 100, 102 and the polling node.

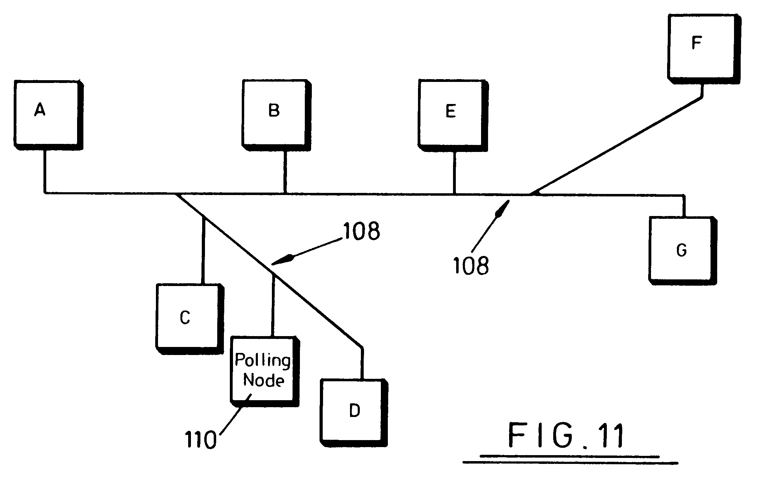

Reference is now made to Fig. 11 of the drawings which depicts a tree topology network with the polling node disposed on the branch of the tree. In this embodiment depicts nodes a to g connected to the tree structure 108. It will be appreciated that the longest end to end propagation time delay on the tree (tp) is from the end of the branch containing nodes c and d to the end of the branch containing node f. Because the branch containing nodes c and d is longer than the branch containing node a and the branch containing node f is longer than the branch containing node g.

Polling master node 110 is connected to the branch containing node d very close to the end of the branch as shown in Fig. 11. Node f is located very close to the end of its branch. It will therefore be appreciated that the propagation delay between polling node p and node d is negligible and the propagation delay between nodes p and node f is tp.

Because node d is very close to the polling node and node f is as remote from the polling node as is possible on the tree it would be natural to choose time delays which would allow node d to transmit before node f. If we assign time delays to node f that allows it to transmit before node d then we have assigned time delays to the nodes which are independent of the physical position of either node on the bus.

Allocation of the following time delays allows node f to transmit before node d.

Assuming the slot pulse is released from the polling node at time t=0 then it is received by node d at t=0 (since there is negligible propagation delay between these nodes) and by node f at t=tp (the maximum end to end propagation delay of the tree structure). Node f transmits its message at time t=tp + td where td is a small time delay. This is received by node d at time t=2.tp + td. Since the delay at node d is 2.tp + 2.td node d does not transmit.

If node f is now moved closer to the polling node it will transmit earlier and thus provide a greater safety margin in preventing node d transmitting. Also if node d is moved further from the polling node it will receive the slot pulse later (and given the same node timer delay) will transmit later (again increasing the safety margin).

It will further be appreciated that the master polling node 110 may be located anywhere on the tree structure and the time delays at individual nodes made independent of their physical location on the bus structure.

If we moved polling node 110 it must lie closer to node f and hence the slot pulse will reach node 110 earlier allowing it to transmit earlier and thus increasing the safety margin. Similarliy if we move node 110 it must be further from node d increasing the time before the slot pulse reaches node d again increasing the safety margin. It will be appreciated that this logic can be repeated for the other nodes connected to the tree. In this case timer values are incremented (from one node to another) by more than twice the maximum end to end propagation delay on the bus.

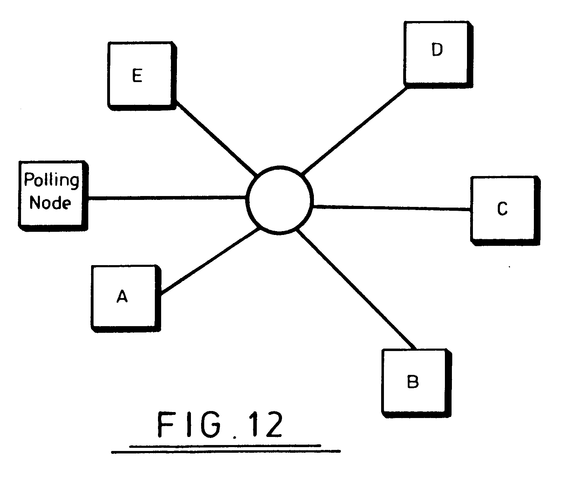

A further embodiment of a star or hub bus configuration is shown in Fig. 12. In this embodiment it will be appreciated that the master polling node may be located on any of the star links and the time delays at individual nodes made independent of their physical location on the hub bus. In this case timer values assigned to successive nodes are incremented (from one node to another) by more than twice the maximum propagation delay (tp) on the longest star link of the hub bus. In the description above with reference to Fig. 6 it was stated that for correct operation the following timer delays were satisfactory:-

Node A : td; Node B : 2td + 2ta; Node C: 3td + 2ta + 2tb.

Because tp > ta, tb and tc the following time delays give physically independent location of the nodes.

Node A : td; Node B : 2td + 2tp; Node C: 3td + 4tp; Node D : 4td + 6tp.

From the above description the operation of the timed deterministic bus access method is provided for a variety of bus structures namely; linear, tree, hub (or star) and uni-directional for the master polling node located at one end or otherwise (except in the case of uni-directional bases).

In all arrangements it will be understood that compared to existing methods of bus access such as token passing the method provides rapid access to a bus for a waiting packet and thus minimises access time delays. This feature is of particular importance for short packet lengths which occur with high data rates (e.g. on fibre optic buses) or with short packets used to convey real-time (RT) information. It will be understood that the above arrangement are used with heterogeneous nodes. An important embodiment of the invention therefore relates to a network designed to carry different priority levels of traffic such as real-time (RT) and non real-time (NRT) traffic. It will be understood that in this embodiment the NRT nodes can employ standard Ethernet protocols.

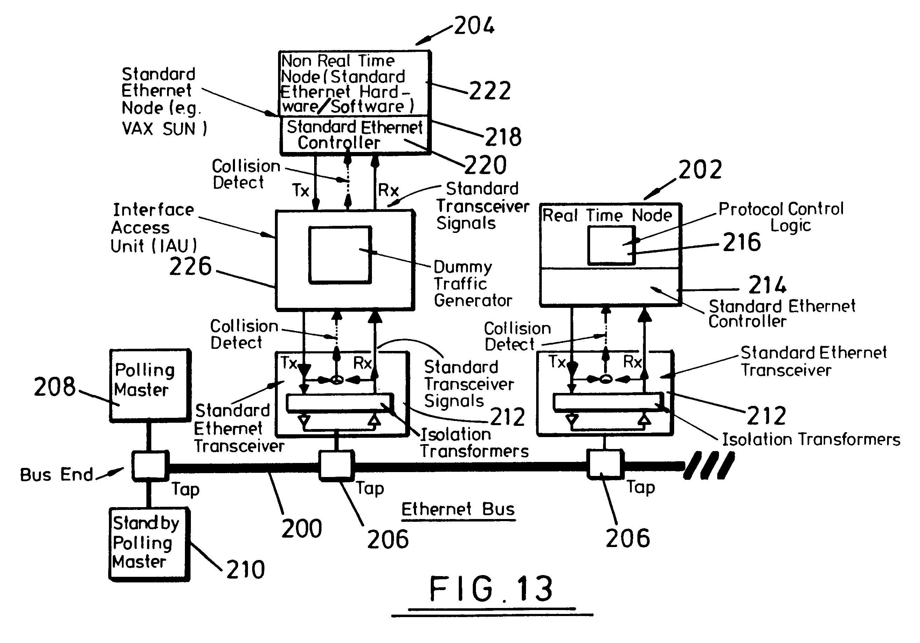

Reference is now made to Fig. 13 of the drawings which depicts an Ethernet bus 200 coupled to a Real-Time (RT) node 202 and a Non Real Time (NRT) node 204 via TAPS 206 on the bus 200. It will be appreciated that a plurality of RT and NRT nodes are coupled to the bus but only two are shown in the interest of clarity. A monitor or polling master node 208 is located at one end of the linear bus 200. Although node 208 may also transmit data only its polling function will be described here. One or more standby polling master nodes 210 are also located at the end of the bus 200 so that if master polling node 208 fails the standby node 210 can assume the polling functions. (Alternatively node time delays can be assigned so that physical location of the nodes including the polling node is unimportant).

Each RT node 202 is coupled to a TAP unit 206 via a standard Ethernet transceiver 212. The RT node 202 includes a standard Ethernet controller 214 and control logic 216 for implementing the method of deterministic access. The NRT node 204 includes a standard Ethernet node 218, for example, a standard computer, such as a Digital Equipment Corporation VAX (trademark) which includes a standard Ethernet controller 220 and standard Ethernet hardware and software unit 222. The node 204 is coupled via an interface access unit (IAU) 226, located in the drop cable (or at an equivalent circuit point with Cheapernet) as disclosed in UK Patent No. 2187917B, and transceiver 212 to TAP 206.

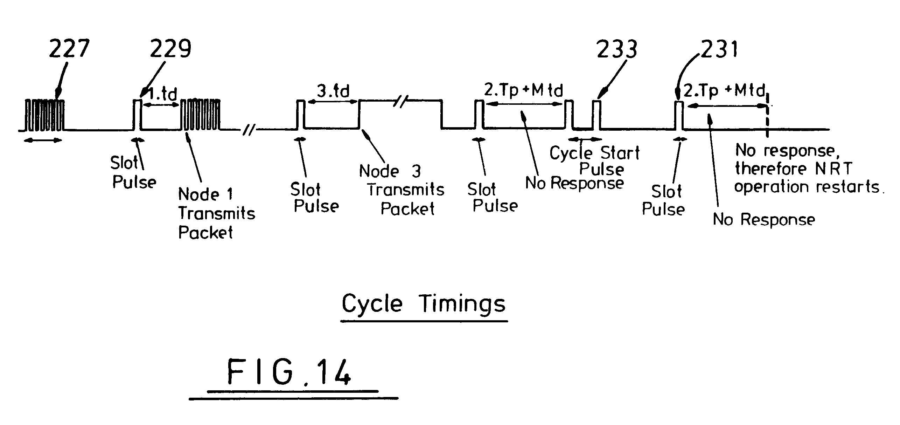

Operation of the timed access method in this arrangement is best described with reference to Fig. 14 as follows:-

When the network is in NRT mode, if an RT node becomes active it injects a special signal pattern onto the Ethernet bus once it detects silence on the bus after the end of a packet. Conveniently the special signal pattern can be on collision signal 227 extended beyond its maximum time limit (e.g. to 100uS.). However any other signal pattern (which can be recognised as non standard by the IAUs) can also be used. The IAUs (226) thus detect the presence of the non standard signal pattern and conveniently generates a carrier signal and transmit a short jam signal to their connected nodes 204 but alternatively can use other signalling methods to prevent transmission from the NRT nodes (204) connected to them the network effectively enters a real-time mode and the polling master 208 issues a slot pulse 229 along the bus as disclosed above. Operation of the basic timed access method for the RT nodes 202 is as previously described above for the bidirectional linear bus tree structure or hub structure with the exception that when no response is received from the slot pulse 231 immediately following a cycle start pulse 233 the network returns to NRT mode. This is best seen in the cycle timing diagram in Fig. 14.

Alternatively it will be appreciated that if the IAUs are so configured, receipt of a slot pulse, preceded by two slot pulses each followed by a pre-determined period of silence can return the network to NRT mode. RT nodes which wish to gain access are then required to issue a non standard signal pattern as before.

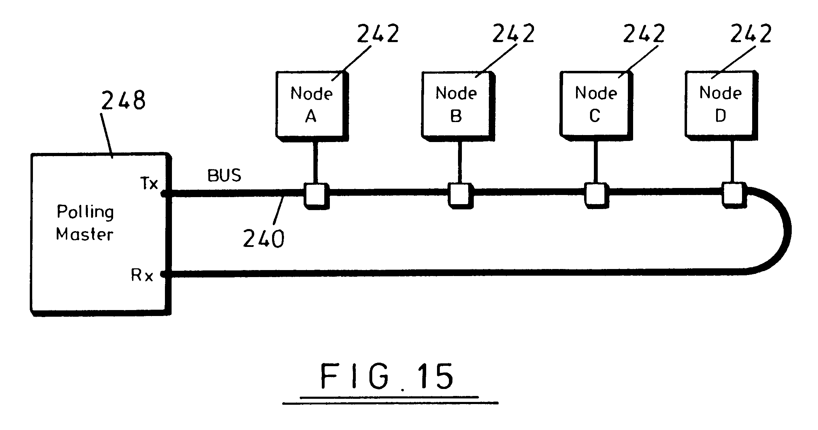

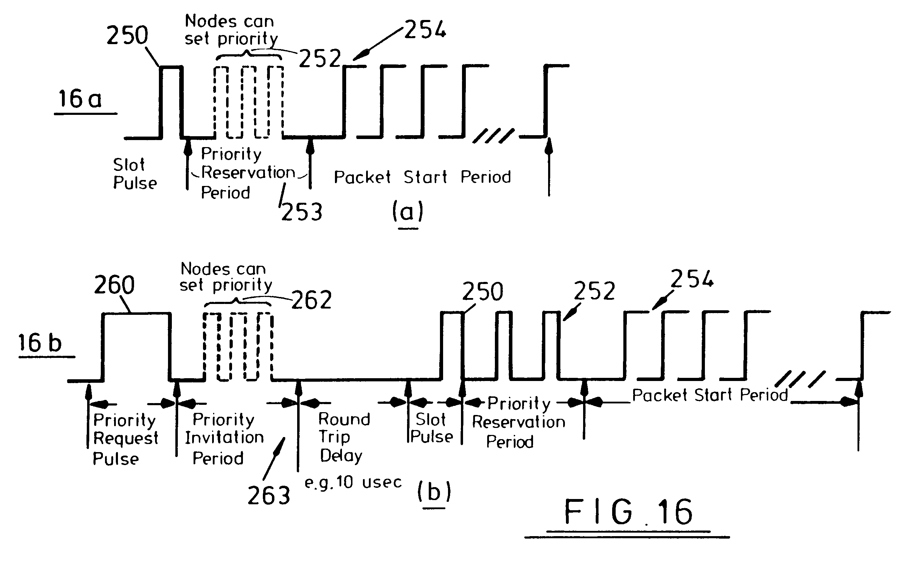

It will be appreciated that timed access protocol can be modified to include prioritised access by nodes and this is described in detail below with reference to Fig. 15 which is a schematic block diagram of a linear bus coupled to a polling system in accordance with a further embodiment of the invention to provide prioritised deterministic access to the bus, and Figs. 16a and 16b which are waveform diagrams depicting propagation of a slot pulse with an accompanying priority reservation period during which the priority reservation field can be set.

Reference is first made to Fig. 15 of the drawings which depicts a bus 240 coupled to four nodes 242A to 242D. It will be appreciated that a plurality of nodes can be coupled but only the four nodes are shown in the interest of clarity. The transmitted output of the master or polling node 248 is located at one end of the bus 240 and the receiving circuits are located at the other end of the bus. The primary purpose of the master node is to control access to the bus rather than transmit data. Standby master nodes (not shown) can be provided as described above.

Operation of the system will now be described with reference to Figs. 15 and 16a. All nodes 242 coupled listen to the bus. The master polling node 248 monitors the bus and issues a timing reference signal which we shall conveniently represent diagramatically as being of "slot" pulse 250 rectangular shape as seen in Fig. 16a, (for a network data transmission rate of 1 to 10 Mbps) when the bus is silent. As will be seen from Fig. 16a a priority reservation field 252 contained within priority reservation period 253 is included after the slot pulse 250 and before the Node Packet Start period (NPS) 254.

As the slot pulse 250 propagates down the bus, the nodes 242 compare their priority with the present state of the priority reservation field and if their priority is higher set their priority by transmitting 3 priority reservation bits 252 onto the bus 240 to allow eight distinct levels of priority. It will be appreciated that the bus 240 may already be transmitting a packet from a lower priority upstream node. The slot pulse 250 is followed by the priority reservation field which after passing node D contains the priority of the highest priority node wishing access to the bus 240, propagates back to the receiving circuits Rx on the master polling node 248. The master polling node 248 then issues the next slot pulse with the priority field 252 set to the highest priority encountered on the previous slot pulse cycle. As the slot pulse travels along the bus each node compares the state of the priority reservation field with its own priority and if it has an equal or higher priority and the bus is silent at the time it wishes to start packet transmission then it can do so. Various algorithms can be employed to reduce the value of the priority reservation field when their is no response to a slot pulse at a particular priority level. In the first algorithm the priority level on release of the next slot pulse is reduced by one. In the second it is divided by two (ie right shifted one place). In the third it is set to zero.

It will be appreciated that in the foregoing method higher priority downstream nodes cannot get access in a particular slot pulse cycle because an upstream node of lower priority has sent its packet using the timed access method. In certain applications this may cause unacceptable waiting time delays.

Reference is now made to Fig. 16b which depicts an arrangement to avoid these waiting time delays by introducing a priority request pulse 260.

During the priority invitation period 263 following the priority request pulse 260 nodes 242A to 242D set their priority fields 262 which circulate back to the master polling station 248. This station then issues a normal slot pulse 250 which allows the first upstream node with priority equal or greater than the priority reservation field 252 to transmit a packet 254 during the current slot pulse cycle.

Various modifications may be made to the embodiments hereinbefore described without departing from the scope of the invention. For example, the foregoing descriptions conveniently depicts the slot pulse, and the priority request and reservation pulses as a single rectangular pulse and the cycle start pulse as a pattern of two adjacent rectangular pulses. It will be appreciated that this is merely a diagrammatic representation to indicate a means of providing unique time references to the receiving stations. Thus any other signal pattern suitable for transmission over a bidirectional or uni-directional bus and which, when received, can provide a unique time reference or priority indication is included within the scope of the invention. For instance it will be appreciated that a sequence of bits (possibly preceded by a preamble) suitably encoded for transmission over a bus (e.g. by Manchester encoding) can be used. In the case of an Ethernet type bus this sequence of bits may consist of a whole or a part of a standard (or non-standard) Ethernet packet and may conform or not to the standard Ethernet signal levels and timings and in decoding the sequence of bits the receivers may group the received sequence of bits into bytes (or other suitable groupings). Thus one sequence of bits, which can be uniquely interpreted by the receiving nodes, may be used as the slot pulse and another unique pattern may be used as the cycle start pulse and as priority request (invitation) or set pulses(s).

It will be further appreciated that at the time of initial network configuration (set-up) the value of the timers in the various nodes can be set manually on the basis of the order of the node from the polling node or automatically. In an example of automatic setting the polling node sends a unique "timer set" signal pattern to each of the receiving nodes in turn possibly using another medium access protocol to establish connections such as CSMA/CD. The unique pattern contains address information so that it can be addressed to an individual node. The recipient node replies after a fixed time interval. The polling node notes the delays involved between the transmission of the "timer set" pattern and receipt of the reply and stores value in the memory of the polling master station. This value is a unique measure of the distance of the particular node from the polling master station. After suitable processing the master polling node then allocates a unique value of timer delay to each node using the network's communication facilities.

Where two or more stations respond at nearly the same time the station addresses are used to assign unique times values. It will be appreciated that when the time increments between the successive timer delay (ntd and (n + 1) td) assigned to successive nodes exceed the time measuring uncertainty by a suitable margin then the method gives satisfactory values of time delay at each node.

It will further be appreciated that to cater for the requirements of higher reliability systems a number of nodes can be equipped with polling facilities so that on failure of upstream nodes the most upstream operational node automatically assumes the polling function.

With uni-directional buses which can support several packets within the end-to-end propagation time of the bus, each node is equipped with the capability of issuing slot pulses after it has transmitted the end of its packet. In this arrangement the master polling node passes received slot pulses back to its upstream output. This arrangement allows several packet to co-exist on the bus and gives advantages analogous to multiple token operation.

It will be understood that the polling master contains facilities which provide for recovery from lost slot and/or cycle start pulses. Also more than eight levels of priority can be provided depending on requirements of the system by increasing the number of priority reservation bits.

Advantages of the invention are; there is provided a method of providing deterministic prioritised access to a bus which can have connected to it a plurality of nodes with different priorities and which is relatively inexpensive and straightforward to implement. It provides deterministic timed access without the need to maintain a logical ring (map) in all nodes and allows nodes to leave and rejoin the network without the need for software reconfiguration. The method provides simplified access to all nodes and offers substantially reduced access time per node when compared with existing methods particularly when priorised features are employed. The improved bus access method of this invention offers considerable advantages in performance over the widely used shared bus access methods such as CSMA/CD, central polling and token passing.

## Claims

1. A method of providing timed deterministic access to a bus structure having a plurality of nodes coupled thereto, said method comprising the steps of,

    a) disposing at least one polling node, which acts as a master polling node, capable of generating a polling signal at a suitable point on the bus structure;

    b) generating a timing reference signal which is independent of the data transmission activity from said master polling node to invite all network activity on the bus structure after a period of silence, the period of silence varying in accordance with the previous activity on the bus structure;

    c) providing each node coupled to the bus structure with a predetermined time delay calculated independently of the data address of the node and fixed prior to the start of normal operation of the network which determines the order of transmission if the node is active;

    d) detecting the generated timing reference signal at each node as the signal travels along the bus structure, said timing reference signal being used by each of the nodes to control its transmission activity onto the bus structure, and

    e) generating a transmission on the bus structure from an active node which has the smallest value of the sum of the predetermined time delay and the time at which the timing reference signal reaches the node if the bus is silent at that time.

2. A method as claimed in Claim 1 wherein said at least one polling node is disposed at the end of the bus.

3. A method as claimed in Claim 2 wherein when the polling node is at the end of the bus the time delay at each node corresponds to the order of the physical location of each node on the bus structure from the master polling node.

4. A method as claimed in Claim 2 wherein the time delay is fixed at each node by modifying the time duration of the reference signal as it passes through each node.

5. A method as claimed in any preceding claim wherein when each node receives a reference signal it

    a) sets a first flag if it has no message to transmit, or

    b) sets a second flag if it has a message to transmit and the state of the bus allows it to transmit information onto the bus structure after its predetermined delay.

6. A method as claimed in Claim 5 wherein each node remains silent after it sets its first flag until it receives the next reference signal from the master polling node.

7. A method as claimed in claim 5 or claim 6 wherein each node remains silent on receipt of subsequent timing reference signals from the master polling node after it has transmitted its message and set its second flag.

8. A method as claimed in any preceding claim wherein the method includes the step of detecting, at the master polling node, when transmission of a packet is complete before the next reference signal is issued.

9. A method as claimed in any one of Claims 5 to 8 wherein the master polling node detects when all nodes have set their second flags and are remaining silent and after a predetermined period issues a cycle start reference signal to reset the second flags of each node to permit all nodes to be able to start transmission on receipt of a subsequent timing reference signal.

10. A method as claimed in any one of claims 5 to 8 wherein the operation of the nodes can be arranged such that a second slot pulse or timing reference signal issued after a predetermined period of silence can reset the second flags of each node to permit all nodes to start transmission.

11. A method as claimed in any one of claims 2 to 10 wherein where polling is at one end of the bus the timer delay of each node is determined by the time between the start of the reference signal and the start of the packet transmission which is n.td where n is an integer representative of the node position from the master polling node and td is a small time delay.

12. A method as claimed in any one of claims 2 to 10 wherein when the system is configured so that the location of the polling node and of the other nodes is unimportant then nodes are assigned time delays 2n.tp + td where n is an integral representation of the number of the node, tp is the maximum end-to-end propagation delay on the bus structure and td is a small time delay.

13. A method as claimed in any one of claims 2 to 4 wherein when the polling node is located at an end of the bus structure the method includes associating each reference signal with a priority reservation field generated between the reference signal and the start of the packet being transmitted from a node, the priority reservation field being compared by each node with its own priority and a node being able to transmit onto the bus structure if its priority is greater or equal to a predetermined priority value, and the bus structure is silent.

14. A method as claimed in claim 13 wherein when the master polling node is located at one end of the bus the master polling node generates a priority request signal followed by a priority invitation period to allow the nodes to set their priority fields, and these fields being circulated back to the master polling node which issues a further reference signal which allows the first upstream node having a priority greater than or equal to the priority and reservation field to transmit a packet during the current interval if the bus silent.

15. A method as claimed in any preceding claim wherein also the time delays of each node can be set manually or automatically.

16. A method as claimed in claim 15 wherein in automatic setting the master polling node sends a reference signal pattern to each node in turn, said reference signal pattern containing node address information for the particular node, and after a preset time the recipient node replies to the master polling node, whereupon the master polling node stores a value representative of the distance of the recipient node from the master polling node in its memory and allocates a unique value of time delay to each node using the network's communication facilities.

17. A method as claimed in any preceding claim wherein the master polling node automatically reconfigures the priority of nodes coupled to the bus structure in response to the node request using the network's communication facilities.

18. A method as claimed in any preceding claim wherein the method includes the step of equipping a number of nodes with polling facilities whereby on failure of upstream nodes the most operational upstream node automatically assumes the polling function.

19. A method as claimed in any one of claims 1 to 17 wherein in the arrangement where the system operates independent of the physical location of the polling node any other active node can assume the polling function.

20. A method as claimed in any preceding claim wherein when the bus structure is a uni-directional bus each node coupled to the bus structure is capable of issuing a reference signal after it has transmitted the end of its packet, wherein the master polling node passes received signal back to its upstream output to allow several packets to co-exist on the uni-directional bus assuming the electrical length of the bus is longer than the transmission time of a packet.

21. A system for providing timed deterministic access to a bus structure having a plurality of nodes coupled thereto, said system comprising,

   a) at least one master polling means (18 ; 44 ; 66 ; 76) coupled to the bus structure (10 ; 40 ; 62 ; 70) at a suitable location for generating a timing reference signal (34 ; 46 ; 84) which is independent of the data transmission activity on said bus structure to initiate all network activity on the bus structure after a period of silence, the period of silence varying in accordance with previous network activity on the bus structure;

   b) timing reference signal detecting means (88) coupled to each node (12 ; 42 ; 64 ; 72) for detecting said reference signal (34 ; 46 ; 84) as it passes said node, each node coupled to the bus structure having means of storing (84) a predetermined time delay calculated independently of the data address and fixed prior to the start of normal operation of the network, said timing reference signal (34 ; 46 ; 84) being used by each of the nodes to control its transmission activity onto the bus structure, and

   c) bus activity monitoring means (88) associated with each node for monitoring the activity of the bus structure, the arrangement being such that a transmission is generated on the bus structure from an active node whose time delay grants it the opportunity to transmit first a packet onto said bus structure a predetermined time after the reference signal has been received by said timing reference signal detecting means if the bus is silent at that time.

22. A system as claimed in Claim 21 wherein the master polling means (18 ; 44 ; 76) at one end of the bus and the active node closest to the polling node transmits first.

23. A system as claimed in Claim 21 wherein the polling node (106 ; 110) is located anywhere on the bus structure and the increments between the time delays assigned to each node in this arrangement are conveniently made longer than twice the maximum propagation delay between the most remote ends on the bus structure.

24. A system as claimed in any one of claims 21 to 23 wherein also said time delay means (84) is variable for each node to vary the time delay after which the node can transmit a packet.

25. A system as claimed in any one of claims 21 to 23 wherein said time delay means (84) is fixed at each node (72), the time delay after which the node (72) issues a packet being modified by lengthening the timing reference signal (87) as it passes through each node (72).

26. A system as claimed in any one of claims 21 to 25 wherein the bus structure is selected from the group consisting of a bidirectional linear bus, a uni-directional linear bus, a star (hub) and a tree.

27. A system as claimed in any one of claims 21 to 26 wherein also the system includes means for generating a priority reservation field coupled to the master polling unit, and priority comparison means coupled to each node for comparing the priority of the reservation field with the priority of the node.

28. A system as claimed in any one of claims 21 to 27 wherein the time delays of each node are manually or automatically settable to a different value.

29. A system as claimed in claim 28 wherein the system nodes are automatically reconfigurable to modify the value of the priority of nodes in response to node requests.

30. A system as claimed in any one of claims 21, 22 or 25 wherein the bus structure is a uni-directional bus (70).

**Patentansprüche**

1. Verfahren zur Durchführung eines zeitlich bestimmten deterministischen Zugriffs auf eine Busstruktur mit mehreren an diese gekoppelten Knoten, wobei das Verfahren die Schritte umfaßt:
   a) Einrichten mindestens eines Aufrufknotens, der als Master-Aufrufknoten fungiert und an einem geeigneten Punkt in der Busstruktur ein Aufrufsignal erzeugen kann;
   b) Erzeugen eines Zeitbezugssignals, das von der Datenübertragungsaktivität von dem Master-Aufrufknoten unabhängig ist, um nach einer Ruheperiode alle Netzaktivitäten in der Busstruktur aufzurufen, wobei sich die Ruheperiode entsprechend der vorherigen Aktivität in der Busstruktur ändert;
   c) Versehen jedes Knotens, der an die Busstruktur gekoppelt ist, mit einer vorbestimmten Zeitverzögerung, die unabhängig von der Datenadresse des Knotens berechnet wird und vor Beginn des normalen Betriebs des Netzes festgelegt wird und welche die Reihenfolge der Übertragung bestimmt, wenn der Knoten aktiv ist;
   d) Ermitteln des erzeugten Zeitbezugssignals in jedem Knoten, während das Signal in der Busstruktur läuft, wobei das Zeitbezugssignal von jedem der Knoten verwendet wird, um seine Übertragungsaktivität an die Busstruktur zu steuern; und
   e) Erzeugen einer Übertragung in der Busstruktur von einem aktiven Knoten, der den kleinsten Wert der Summe aus der vorbestimmten Zeitverzögerung und der Zeit hat, zu der das Zeitbezugssignal den Knoten erreicht, wenn der Bus zu dieser Zeit ruht.

2. Verfahren nach Anspruch 1, wobei der mindestens eine Aufrufknoten am Ende des Busses eingerichtet wird.

3. Verfahren nach Anspruch 2, wobei, wenn der Aufrufknoten am Ende des Busses ist, die Zeitverzögerung in jedem Knoten der Reihenfolge der physischen Lage jedes Knotens in der Busstruktur vom Master-Aufrufknoten an entspricht.

4. Verfahren nach Anspruch 2, wobei die Zeitverzögerung in jedem Knoten festgelegt wird, in dem die Zeitdauer des Bezugssignals modifiziert wird, während es durch jeden Knoten läuft.

5. Verfahren nach einem der vorhergehenden Ansprüche, wobei, wenn jeder Knoten ein Bezugssignal empfängt, er
   a) ein erstes Flag setzt, wenn er keine Nachricht zu übertragen hat, oder

**14**

b) ein zweites Flag setzt, wenn er eine Nachricht zu übertragen hat und der Zustand des Busses es zuläßt, daß er nach seiner vorbestimmten Verzögerung Informationen an die Busstruktur überträgt.

6. Verfahren nach Anspruch 5, wobei jeder Knoten ruht, nachdem er sein erstes Flag gesetzt hat, bis er das nächste Bezugssignal vom Master-Aufrufknoten empfängt.

7. Verfahren nach Anspruch 5 oder 6, wobei jeder Knoten nach Empfang der nachfolgenden Zeitbezugssignale vom Master-Aufrufknoten weiter ruht, nachdem er seine Nachricht übertragen und sein zweites Flag gesetzt hat.

8. Verfahren nach einem der vorhergehenden Ansprüche, wobei das Verfahren den Schritt des Ermittelns im Master-Aufrufknoten aufweist, wenn eine Übertragung eines Pakets beendet ist, bevor das nächste Bezugssignal ausgegeben wird.

9. Verfahren nach einem der Ansprüche 5 bis 8, wobei der Master-Aufrufknoten ermittelt, wenn alle Knoten ihre zweiten Flags gesetzt haben und weiter ruhen, und nach einer vorbestimmten Periode ein Zyklusstart-Bezugssignal ausgibt, um die zweiten Flags jedes Knotens zurückzusetzen, um es allen Knoten zu ermöglichen, nach Empfang eines nachfolgenden Zeitbezugssignals eine Übertragung zu beginnen.

10. Verfahren nach einem der Ansprüche 5 bis 8, wobei die Arbeitsweise der Knoten so eingerichtet werden kann, daß ein zweiter Schlitzimpuls oder ein zweites Zeitbezugssignal, der bzw. das nach einer vorbestimmten Ruheperiode ausgegeben wird, die zweiten Flags jedes Knotens zurücksetzen kann, um es allen Knoten zu ermöglichen, eine Übertragung zu beginnen.

11. Verfahren nach einem der Ansprüche 2 bis 10, wobei, wenn das Aufrufen an einem Ende des Busses stattfindet, die Zeitverzögerung jedes Knotens bestimmt wird durch die Zeit zwischen dem Beginn des Bezugssignals und dem Beginn der Paketübertragung, die n.td entspricht, wobei n eine ganze Zahl ist, die die Knotenposition vom master-Aufrurknoten an darstellt und td eine kleine Zeitverzögerung ist.

12. Verfahren nach einem der Ansprüche 2 bis 10, wobei, wenn das System so konfiguriert ist, daß die Lage des Aufrufknotens und der anderen Knoten unwichtig ist, dann Knoten Laufzeiten 2n.tp + td zugeordnet werden, wobei n eine Integraldarstellung der Anzahl der Knoten, tp die maximale Laufzeit von Ende zu Ende in der Busstruktur und td eine kleine Zeitverzögerung ist.

13. Verfahren nach einem der Ansprüche 2 bis 4, wobei, wenn der Aufrufknoten sich an einem Ende der Busstruktur befindet, das Verfahren ein Verbinden jedes Bezugssignals mit einem Prioritätsreservierungsfeld einschließt, das zwischen dem Bezugssignal und dem Anfang des Pakets, das von einem Knoten übertragen wird, erzeugt wird, wobei das Prioritätsreservierungsfeld von jedem Knoten mit seiner eigenen Priorität verglichen wird und ein Knoten in der Lage ist, an die Busstruktur zu übertragen, wenn seine Priorität größer oder gleich einem vorbestimmten Prioritätswert ist und die Busstruktur ruht.

14. Verfahren nach Anspruch 13, wobei, wenn der Master-Aufrufknoten sich an einem Ende des Busses befindet, der Master-Aufrufknoten ein Prioritätsanfragesignal erzeugt, das von einer Prioritätsaufrufperiode gefolgt wird, um es den Knoten zu ermöglichen, ihre Prioritätsfelder zu setzen, wobei diese Felder im Umlauf wieder zurück zum Master-Aufrufknoten gelangen, der ein weiteres Bezugssignal hat, das es dem in Laufrichtung ersten Knoten, der eine Priorität hat, die größer oder gleich der Priorität des Reservierungsfeldes ist, ermöglicht, während des aktuellen Intervalls ein Paket zu übertragen, wenn der Bus ruht.

15. Verfahren nach einem der vorhergehenden Ansprüche, wobei außerdem die Zeitverzögerungen jedes Knotens manuell oder automatisch gesetzt werden können.

16. Verfahren nach Anspruch 15, wobei der Master-Aufrufknoten beim automatischen Setzen ein Bezugssignalmuster nacheinander an jeden Knoten sendet, wobei das Bezugssignalmuster Knotenadreßinformationen für den bestimmten Knoten enthält, und nach einer vorher eingestellten Zeit der Empfängerknoten auf den Master-Aufrufknoten reagiert, woraufhin der Master-Aufrufknoten einen Wert speichert, der die Entfernung des Empfängerknotens vom Master-Aufrufknoten in seinem Speicher darstellt, und unter Verwendung der Netzkommunikationseinrichtungen jedem Knoten einen eindeutigen Zeitverzögerungswert zuordnet.

17. Verfahren nach einem der vorhergehenden Ansprüche, wobei der Master-Aufrufknoten die Priorität der Knoten, die an die Busstruktur gekoppelt sind, als Antwort auf die Knotenanforderung unter Verwendung der Netzkommunikationseinrichtungen automatisch neu konfiguriert.

18. Verfahren nach einem der vorhergehenden Ansprüche, wobei das Verfahren den Schritt des Ausstattens einer Anzahl von Knoten mit Aufrufeinrichtungen einschließt, wodurch bei Ausfall von in Laufrichtung liegenden Knoten der operativste in Laufrichtung liegende Knoten automatisch die Aufruffunktion annimmt.

19. Verfahren nach einem der Ansprüche 1 bis 17, wobei bei der Anordnung, bei der das System unabhängig von der physischen Lage des Aufrufknotens arbeitet, irgend ein anderer aktiver Knoten die Aufruffunktion annehmen kann.

20. Verfahren nach einem der vorhergehenden Ansprüche, wobei, wenn die Busstruktur ein unidirektionaler Bus ist, jeder Knoten, der an die Busstruktur gekoppelt ist, in der Lage ist, ein Bezugssignal auszugeben, nachdem er das Ende seines Pakets übertragen hat, wobei der Master-Aufrufknoten ein empfangenes Signal an seinen in Laufrichtung liegenden Ausgang zurückgibt, damit mehrere Pakete gemeinsam im unidirektionalen Bus vorhanden sein können, wobei angenommen wird, daß die elektrische Länge des Busses länger ist als die Übertragungszeit eines Pakets.

21. System zum Durchführen eines zeitlich bestimmten deterministischen Zugriffs auf eine Busstruktur mit mehreren an diese gekoppelten Knoten, wobei das System aufweist:
    a) mindestens eine Master-Aufrufeinrichtung (18; 44; 66; 76), die an einer geeigneten Stelle an die Busstruktur (10; 40; 62; 70) gekoppelt ist, zum Erzeugen eines Zeitbezugssignals (34; 46; 84), das von der Datenübertragungsaktivität in der Busstruktur unabhängig ist, um nach einer Ruheperiode alle Netzaktivitäten in der Busstruktur auszulösen, wobei sich die Ruheperiode entsprechend der vorherigen Netzaktivität in der Busstruktur ändert;
    b) eine Zeitbezugssignalermittlungseinrichtung (88), die an jeden Knoten (12; 42; 64; 72) gekoppelt ist, zum Ermitteln des Bezugssignals (34; 46; 84), während es durch den Knoten läuft, wobei jeder Knoten, der an die Busstruktur gekoppelt ist, eine Einrichtung zum Speichern (84) einer vorbestimmten Zeitverzögerung aufweist, die unabhängig von der Datenadresse berechnet und vor Beginn des normalen Betriebs des Netzes festgelegt wird, wobei das Zeitbezugssignal (34; 46; 84) von jedem der Knoten verwendet wird, um ihre Übertragungsaktivität an die Busstruktur zu steuern; und
    c) eine Busaktivitätsüberwachungseinrichtung (88), die mit jedem Knoten verbunden ist, zum Überwachen der Aktivität der Busstruktur, wobei die Anordnung derartig ist, daß eine Übertragung in der Busstruktur von einem aktiven Knoten aus erzeugt wird, dessen Zeitverzögerung es ihm ermöglicht, zunächst ein Paket an die Busstruktur zu übertragen, und zwar eine vorbestimmte Zeit nachdem das Bezugssignal von der Zeitbezugssignalermittlungseinrichtung empfangen worden ist, wenn der Bus zu dieser Zeit ruht.

22. System nach Anspruch 21, wobei die Master-Aufrufeinrichtung (18; 44; 76) sich an einem Ende des Busses befindet und der aktive Knoten, der dem Aufrufknoten am nächsten ist, zuerst überträgt.

23. System nach Anspruch 21, wobei der Aufrufknoten (106; 110) sich irgendwo in der Busstruktur befindet und die Inkremente zwischen den Zeitverzögerungen, die bei dieser Anordnung jedem Knoten zugeordnet werden, auf herkömmliche Weise so verändert werden, daß sie länger sind als das zweifache der maximalen Laufzeit zwischen den entferntesten Enden in der Busstruktur.

24. System nach einem der Ansprüche 21 bis 23, wobei die Zeitverzögerungseinrichtung (84) für jeden Knoten variabel ist, um die Zeitverzögerung, nach der der Knoten ein Paket übertragen kann, zu verändern.

25. System nach einem der Ansprüche 21 bis 23, wobei die Zeitverzögerungseinrichtung (84) in jedem Knoten (72) festgelegt wird, wobei die Zeitverzögerung, nach der der Knoten (72) ein Paket ausgibt, dadurch modifiziert wird, daß das Zeitbezugssignal (87) verlängert wird, während es durch jeden Knoten (72) läuft.

26. System nach einem der Ansprüche 21 bis 25, wobei die Busstruktur aus der Gruppe gewählt wird, die aus einem bidirektionalen linearen Bus, einem unidirektionalen linearen Bus, einem Stern (Nabe) und einem Baum besteht.

27. System nach einem der Ansprüche 21 bis 26, wobei das System außerdem eine Einrichtung zum Erzeugen eines Prioritätsreservierungsfeldes, das an die Master-Aufrufeinheit gekoppelt ist, und eine Prioritätsvergleichseinrichtung, die an jeden Knoten gekoppelt ist, zum Vergleichen der Priorität des Reservierungsfeldes mit der Priorität des Knotens aufweist.

28. System nach einem der Ansprüche 21 bis 27, wobei die Zeitverzögerungen jedes Knotens manuell oder automatisch auf einen unterschiedlichen Wert setzbar sind.

29. System nach Anspruch 28, wobei die Systemknoten automatisch neu konfigurierbar sind, um den Wert der Priorität der Knoten als Antwort auf Knotenanforderungen zu modifizieren.

30. System nach einem der Ansprüche 21, 22 oder 25, wobei die Busstruktur ein unidirektionaler Bus (70) ist.

**Revendications**

1. Procédé permettant d'assurer un accès déterministe cadencé à une structure de bus comportant une pluralité de noeuds qui lui sont couplés, ledit procédé comprenant les étapes de:

a) disposition d'au moins un noeud d'interrogation qui joue le rôle de noeud d'interrogation maître permettant de générer un signal d'interrogation en un point approprié sur la structure de bus;

b) génération d'un signal de référence de cadencement qui est indépendant de l'activité de transmission de données depuis ledit noeud d'interrogation maître afin d'inviter la totalité de l'activité du réseau sur la structure de bus après une période de silence, la période de silence variant en fonction de l'activité précédente sur la structure de bus;

c) allocation à chaque noeud couplé à la structure de bus d'un retard temporel prédéterminé calculé indépendamment de l'adresse des données du noeud et fixé avant le début d'un fonctionnement normal du réseau, lequel détermine l'ordre de transmission si le noeud est actif;

d) détection du signal de référence de cadencement généré au niveau de chaque noeud en tant que signal qui se déplace le long de la structure de bus, ledit signal de référence de cadencement étant utilisé par chacun des noeuds afin de commander son activité de transmission sur la structure de bus; et

e) génération d'une transmission sur la structure de bus depuis un noeud actif qui présente la valeur la plus faible de la somme du retard temporel prédéterminé et du temps auquel le signal de référence de cadencement atteint le noeud si le bus est silencieux à cet instant.

2. Procédé selon la revendication 1, dans lequel ledit au moins un noeud d'interrogation est disposé au niveau de l'extrémité du bus.

3. Procédé selon la revendication 2, dans lequel, lorsque le noeud d'interrogation est au niveau de l'extrémité du bus, le retard temporel au niveau de chaque noeud correspond a l'ordre de l'emplacement physique de chaque noeud sur la structure de bus en partant du noeud d'interrogation maître.

4. Procédé selon la revendication 2, dans lequel le retard temporel est fixé au niveau de chaque noeud en modifiant la durée temporelle du signal de référence lorsqu'il traverse chaque noeud.

5. Procédé selon l'une quelconque des revendications précédentes, dans lequel, lorsque chaque noeud reçoit un signal de référence, il:

a) établit un premier indicateur s'il n'a pas de message à transmettre; ou il

b) établit un second indicateur s'il a un message à transmettre et si l'état du bus lui permet de transmettre une information sur la structure de bus après son retard prédéterminé.

6. Procédé selon la revendication 5, dans lequel chaque noeud reste silencieux après qu'il établit son premier indicateur jusqu'à ce qu'il reçoive le signal de référence suivant depuis le noeud d'interrogation maître.

7. Procédé selon la revendication 5 ou 6, dans lequel chaque noeud reste silencieux lors de la réception de signaux de référence de cadencement ultérieurs en provenance du noeud d'interrogation maître après qu'il a transmis son message et qu'il a établi son second indicateur.

8. Procédé selon l'une quelconque des revendications précédentes, dans lequel le procédé inclut l'étape de détection, au niveau du noeud d'interrogation maître, de l'instant où la transmission d'un paquet est terminée avant que le signal de référence suivant ne soit délivré.

9. Procédé selon l'une quelconque des revendications 5 à 8, dans lequel le noeud d'interrogation maître détecte l'instant où tous les noeuds ont établi leurs seconds indicateurs et où ils restent silencieux et après une période prédéterminée, délivre un signal de référence de début de cycle afin de remettre à l'état initial les seconds indicateurs de chaque noeud afin de permettre à tous les noeuds de pouvoir démarrer une transmission lors de la réception d'un signal de référence de cadencement ultérieur.

10. Procédé selon l'une quelconque des revendications 5 à 8, dans lequel le fonctionnement des noeuds peut être agencé de telle sorte qu'une seconde impulsion de fenêtre temporelle ou qu'un second signal de référence de cadencement délivré après une période de silence prédéterminée permette de remettre à l'état initial les seconds indicateurs de chaque noeud afin de permettre à tous les noeuds de démarrer une transmission.

11. Procédé selon l'une quelconque des revendications 2 à 10, dans lequel, lorsqu'une interrogation s'effectue au niveau d'une extrémité du bus, le retard de minuterie de chaque noeud est déterminé par le temps entre le début du signal de référence et le début de la transmission de paquet qui vaut n.td où n est un entier représentatif de la position du noeud par rapport au noeud d'interrogation maître et td est un retard temporel faible.

12. Procédé selon l'une quelconque des revendications 2 à 10, dans lequel, lorsque le système est configuré de telle sorte que l'emplacement du noeud d'interrogation et des autres noeuds n'a pas d'importance. alors des noeuds se voient assigner des retards temporels de 2n.tp + td où n est une représentation entière du numéro du noeud, tp est le retard de propagation de bout-en-bout maximum sur la structure de bus et td est un retard temporel faible.

13. Procédé selon l'une quelconque des revendications 2 à 4, dans lequel, lorsque le noeud d'interrogation est situé au niveau d'une extrémité de la structure de bus, le procédé inclut l'association à chaque signal de référence d'une zone de réservation de priorité générée entre le signal de référence et le début du paquet qui est transmis depuis un noeud, la zone de réservation de priorité étant comparée par chaque noeud à sa propre priorité et un noeud pouvant transmettre sur la structure de bus si sa priorité est supérieure ou égale à une valeur de priorité prédéterminée, et la structure de bus est silencieuse.

14. Procédé selon la revendication 13, dans lequel, lorsque le noeud d'interrogation maître est situé au niveau d'une extrémité du bus, le noeud d'interrogation maître génère un signal de requête de priorité qui est suivi par une période d'invitation de priorité pour permettre aux noeuds d'établir leurs zones de priorité et ces zones sont mises en circulation en retour jusqu'au noeud d'interrogation maître qui délivre un signal de référence supplémentaire qui permet au premier noeud amont présentant une priorité supérieure ou égale a la priorité et une zone de réservation de transmettre un paquet pendant l'intervalle courant si le bus est silencieux.

15. Procédé selon l'une quelconque des revendications précédentes, dans lequel également les retards temporels de chaque noeud peuvent être établis manuellement ou automatiquement.

16. Procédé selon la revendication 15, dans lequel, lors de l'établissement automatique, le noeud d'interrogation maître envoie un motif de signal de référence à chaque noeud tour-à-tour, ledit motif de signal de référence contenant une information d'adresse de noeud pour le noeud particulier, et après un temps pré-établi, le noeud destinataire répond au noeud d'interrogation maître, suite à quoi le noeud d'interrogation maître stocke une valeur représentative de la distance séparant le noeud destinataire et le noeud d'interrogation martre dans sa mémoire et alloue une unique valeur de retard temporel à chaque noeud en utilisant les équipements de communication du réseau.

17. Procédé selon l'une quelconque des revendications précédentes, dans lequel le noeud d'interrogation maître reconfigure automatiquement la priorité des noeuds couplés à la structure de bus en réponse à la requête de noeud en utilisant les équipements de communication du réseau.

18. Procédé selon l'une quelconque des revendications précédentes, dans lequel le procédé inclut l'étape consistant à munir un certain nombre de noeuds d'équipements d'interrogation et ainsi, lors d'une défaillance de noeuds amont, le noeud amont le plus opérationnel assure automatiquement la fonction d'interrogation.

19. Procédé selon l'une quelconque des revendications 1 à 17, dans lequel, dans l'agencement dans lequel le système fonctionne indépendamment de l'emplacement physique du noeud d'interrogation, un quelconque autre noeud actif peut assurer la fonction d'interrogation.

20. Procédé selon l'une quelconque des revendications précédentes, dans lequel, lorsque la structure de bus est un bus unidirectionnel, chaque noeud couplé à la structure de bus peut délivrer un signal de référence après qu'il a transmis la fin de son paquet, dans lequel le noeud d'interrogation maître passe un signal reçu en retour sur sa sortie amont pour permettre à plusieurs paquets de coexister sur le bus unidirectionnel si l'on suppose que la longueur électrique du bus est supérieure au temps de transmission d'un paquet.

21. Système permettant d'assurer un accès déterministe cadencé à une structure de bus comportant une pluralité de noeuds qui lui sont couplés,

ledit système comprenant:

a) au moins un moyen d'interrogation maître (18; 44; 66; 76) couplé à la structure de bus (10; 40; 62; 70) en un emplacement approprié pour générer un signal de référence de cadencement (34; 46; 84) qui est indépendant de l'activité de transmission de données sur ladite structure de bus afin d'initier la totalité de l'activité du réseau sur la structure de bus après une période de silence, la période de silence variant conformément à une activité précédente du réseau sur la structure de bus;

b) un moyen de détection de signal de référence de cadencement (88) couplé à chaque noeud (12; 42; 64; 72) pour détecter ledit signal de référence (34; 46; 84) lorsqu'il passe ledit noeud, chaque noeud couplé à la structure de bus comportant un moyen de stockage (84) permettant de stocker un retard temporel prédéterminé calculé de façon indépendante de l'adresse de données et fixé avant le début d'un fonctionnement normal du réseau. ledit signal de référence de cadencement (34; 46; 84) étant utilisé par chacun des noeuds afin de commander son activité de transmission sur la structure de bus; et

c) un moyen de surveillance d'activité de bus (88) associé à chaque noeud pour surveiller l'activité de la structure de bus, l'agencement étant tel qu'une transmission est générée sur la structure de bus depuis un noeud actif dont le retard temporel lui garantit l'opportunité de transmettre en premier un paquet sur ladite structure de bus un temps prédéterminé après que le signal de référence a été reçu par ledit moyen de détection de signal de référence de cadencement si le bus est silencieux à cet instant.

22. Système selon la revendication 21, dans lequel le moyen d'interrogation maître (18; 44; 76) est situé au niveau d'une extrémité du bus et le noeud actif le plus proche du noeud d'interrogation transmet en premier.

23. Système selon la revendication 21, dans lequel le noeud d'interrogation (106; 110) est situé n'importe où sur la structure de bus et les incréments entre les retards temporels assignés à chaque noeud dans cet agencement sont rendus commodément plus longs que deux fois le retard de propagation maximum entre les extrémités les plus à distance sur la structure de bus.

24. Système selon l'une quelconque des revendications 21 à 23, dans lequel également ledit moyen de retard temporel (84) est variable pour chaque noeud afin de faire varier le retard temporel après lequel le noeud peut transmettre un paquet.

25. Système selon l'une quelconque des revendications 21 à 23, dans lequel ledit moyen de retard temporel (84) est fixé au niveau de chaque noeud (72), le retard temporel après lequel le noeud (72) délivre un paquet étant modifié en rallongeant le signal de référence de cadencement (87) lorsqu'il traverse chaque noeud (72).

26. Système selon l'une quelconque des revendications 21 à 25, dans lequel la structure de bus est choisie parmi le groupe comprenant un bus linéaire bidirectionnel, un bus linéaire unidirectionnel, une étoile (connexion) et un arbre.

27. Système selon l'une quelconque des revendications 21 à 26, dans lequel également le système inclut un moyen permettant de générer une zone de réservation de priorité couplée à l'unité d'interrogation maître, et un moyen de comparaison de priorité couplé à chaque noeud pour comparer la priorité de la zone de réservation a la priorité du noeud.

28. Système selon l'une quelconque des revendications 21 à 27, dans lequel les retards temporels de chaque noeud peuvent être établis manuellement ou automatiquement à une valeur différente.

29. Système selon la revendication 28, dans lequel les noeuds du système peuvent être reconfigurés automatiquement afin de modifier la valeur de la priorité des noeuds en réponse à des requêtes de noeud.

30. Système selon l'une quelconque des revendications 21, 22 ou 25, dans lequel la structure de bus est un bus unidirectionnel (70).

FIG. 1

EP 0 456 701 B1

**2a**

Pulse released
by node P

34

**2b**

Pulse reaches
downstream node
which does not
responds

34

**2c**

Pulse reaches
next downstream
node (2) — starts
transmission

tp2

2 . td

36

Packet

34

tp n + n·td

**2d**

Pulse reaches next
downstream node
(n+1) · unable to set
PICC

34

36

tp n+1 (n+1)· td

Time at which node n + 1
would have started
transmission

## FIG . 2

1.td  3.td  2.Tp + M.td  1.td

40  34  36  34  34  No Response  40  34  36

Cycle Start Pulse  Slot Pulse  Node 1 Transmits Packet  Slot Pulse  Node 3 Transmits Packet  Slot Pulse  Cycle Start Pulse  Slot Pulse  Node 1 Transmits Packet

Cycle Timings

FIG. 3

EP 0 456 701 B1

Operation of Timed Access Method with a Tree Branch

FIG.4

EP 0 456 701 B1

EP 0 456 701 B1

## 5.a

Bus state viewed
from Node P.

Slot Pulse

46

## 5.b

Bus state viewed
from Node D

46

47 Packet Start

$t_1 + t_2$    $d \cdot t_d$

## 5.c

Bus state viewed
from node B

46

Packet   Start   from Node D

47

$t_1 + t_3$    $t_2 + t_3$

$t_1 + t_2 + d \cdot t_d + t_2 + t_3 + t_d$

Timer   Delay =
$2t_2 + (d+1) \cdot t_d$

Time at which node n+1
would have started
transmission

# FIG. 5

Operation of Timed Access Method with a Star Configuration

# FIG.6

EP 0 456 701 B1

Un-directional Bus

# FIG.7

EP 0 456 701 B1

EP 0 456 701 B1

90

88

Upstream
Packet
Detection
Logic

Control
Signal

Node
Transmisson
Buffer

If Network Free:
Activate
Transmission and
Operate Changeover Switch

94

REPEATER

86

74

Amplifier

84

82

Control
Signal

Changeover
Switch

92

Delay

70

70

70

FIG.8

FIG. 9

9a — Pulse released by node P

Slot Pulse

87

$t_s$

9b — Pulse passes through first downstream node which does not respond

89

$t_s$ $t_w$

9c — Pulse reaches downstream node n, which starts transmission.

89

Packet

$t_s$ $n \cdot t_w$ $t_f$

9d — Pulse reaches next downstream node (n+1) unable to start transmission.

89

$t_s$ $(n+1) \cdot t_w$ $t_f$

Time at which node n+1 would have started transmission

EP 0 456 701 B1

FIG. 10

EP 0 456 701 B1

FIG. 11

F I G . 12

FIG.13

EP 0 456 701 B1

**Cycle Timings**

**FIG.14**

EP 0 456 701 B1

EP 0 456 701 B1

F I G . 15

EP 0 456 701 B1

FIG.16